# EUROPÄISCHE PATENTANMELDUNG

(11) **EP 1 283 099 A2**
(43) Veröffentlichungstag der Anmeldung: **12.02.2003**
(21) Anmeldenummer: 02015215.3
(22) Anmeldetag: 09.07.2002
(51) Int. Cl.: B29C 44/14

(54) **Verfahren zur Herstellung von geschäumten Bauteilen mit Oberflächendekormaterial**

(30) Priorität: 12.07.2001 DE 10134024
(71) Anmelder: MöllerTech GmbH, 33649 Bielefeld (DE)
(72) Erfinder: Hengesbach, Johannes-Albert, Dr., 33659 Bielefeld (DE)
(74) Vertreter: Schirmer, Siegfried, Dipl.-Ing.

(57) **Zusammenfassung**

Mit der Erfindung soll ein geschäumtes Bauteil mit Oberflächendekor ohne das vorherige Aufbringen einer zusätzlichen Rückseitenbeschichtung hergestellt werden, wobei eine ausreichende Qualität des Bauteils garantiert ist. Nach der Erfindung wird der Kunststoff mit einem physikalischen Treibmittel aufgeschäumt und unmittelbar auf das Dekormaterial aufgebracht, wobei vorteilhafterweise als physikalisches Treibmittel CO₂, Stickstoff oder Wasser eingesetzt wird.

Durch das günstige Viskositätsverhalten und den durch das Treibmittel erzielten Schäumdruck wird die Kunststoffschmelze innerhalb der Werkzeugkavität gleichmäßig ausgedehnt.

## Beschreibung

Die Erfindung betrifft ein Verfahren zur Herstellung von geschäumten Bauteilen mit Oberflächendekormaterial, wobei auf das Dekormaterial insbesondere in der Spritzgieß-, Hinterpress- oder Hinterblastechnik eine Kunststoffschmelze aufgebracht wird.

Bei der Herstellung von geschäumten Bauteilen mit Dekormaterial, beispielsweise hergestellt in der Spritzgieß-, Hinterpress- oder Hinterblastechnik, muß das Oberflächendekormaterial wegen der Verarbeitungsdrücke und der hohen Temperatur einer Kunststoffschmelze durch eine zusätzliche Rückseitenbeschichtung, beispielsweise mit einem Vlies- oder einem Abstandsgewirke, geschützt werden. Die Schutzschicht wird in der Regel durch eine Verklebung und/oder durch eine Flammkaschierung mit dem Dekormaterial verbunden. Je nach Beanspruchung wird dabei die Dicke der Schutzschicht sowie die materialspezifische Zusammensetzung (Polyesterfasern und/oder Polypropylenfasern und/oder Viskose usw.) variiert. Das Material für die Schutzschicht kann dabei beispielsweise als Gewebe, Gewirke oder vernadeltes oder wasserstrahlverfestigtes Vlies ausgeführt werden. Zur Verbindung zwischen Dekor und Schutzsicht kann vorteilhafterweise ein vernetzter oder unvernetzter Klebstoff auf Basis von Copolyester oder Copolyamid verwendet werden. Die Herstellung derartiger Aufbauten ist aufwendig, führt zu einer Gewichtserhöhung und über Schwankungen der Einzelkomponenten auch zu einem hohen Ausschussrisiko. Darüber hinaus können bei der Verarbeitung Oberflächenstörungen auftreten und der Klebstoffverbund durch die erneute Temperaturbelastung zu Fehlstellen oder Ausschuss in der Haftung zwischen Dekorverbund und Trägermaterial führen.

Der Erfindung liegt die Aufgabe zugrunde, ein geschäumtes Bauteil mit Oberflächendekormaterial ohne das vorherige Aufbringen einer zusätzlichen Rückseitenbeschichtung herzustellen bei Gewährleistung einer den Anforderungen entsprechenden Qualität des Bauteils.

Diese Aufgabe wird erfindungsgemäß dadurch gelöst, daß der Kunststoff mit einem physikalischen Treibmittel aufgeschäumt und unmittelbar auf das Dekormaterial aufgebracht wird, wobei vorteilhafterweise als physikalisches Treibmittel CO₂, Stickstoff oder Wasser eingesetzt wird.

Durch das erfindungsgemäß erzielte günstige Viskositätsverhalten und den durch das Treibmittel erzielten Schäumdruck wird die Kunststoffschmelze innerhalb der Werkzeugkavität gleichmäßig ausgedehnt und durch das physikalische Treibmittel Viskoseveränderungen der Kunststoffschmelze erzielt.

## Patentansprüche

1. Verfahren zur Herstellung von geschäumten Bauteilen mit Oberflächendekormaterial, wobei auf das Dekormaterial insbesondere in der Spritzgieß-, Hinterpress- oder Hinterblastechnik eine Kunststoffschmelze aufgebracht wird, **dadurch gekennzeichnet, daß** der Kunststoff mit einem physikalischen Treibmittel aufgeschäumt und unmittelbar auf das Dekormaterial aufgebracht wird.

2. Verfahren nach Anspruch 1, **dadurch gekennzeichnet, daß** als physikalisches Treibmittel CO₂, Stickstoff oder Wasser eingesetzt wird.

3. Verfahren nach Anspruch 1 oder 2, **dadurch gekennzeichnet, daß** die Kunststoffschmelze innerhalb der Werkzeugkavität gleichmäßig ausgedehnt wird.

4. Verfahren nach einem der Ansprüche 1 bis 3, **dadurch gekennzeichnet, daß** durch das physikalische Treibmittel Viskositätsveränderungen der Kunststoffschmelze erzielt werden.
